# EUROPÄISCHE PATENTSCHRIFT

(11) **EP 1 901 939 B1**
(45) Veröffentlichungstag und Bekanntmachung des Hinweises auf die Patenterteilung: **21.12.2011**
(21) Anmeldenummer: 06754650.7
(22) Anmeldetag: 01.07.2006
(51) Int. Cl.: B60N 2/30, B60N 2/36

(54) **FAHRZEUGSITZ, INSBESONDERE KRAFTFAHRZEUGSITZ**
VEHICLE SEAT, PARTICULARLY MOTOR VEHICLE SEAT
SIEGE DE VEHICULE, NOTAMMENT DE VEHICULE A MOTEUR

(30) Priorität: 08.07.2005 DE 102005032382
(43) Veröffentlichungstag der Anmeldung: 26.03.2008
(73) Patentinhaber: KEIPER GmbH & Co. KG, 67657 Kaiserslautern (DE)
(72) Erfinder: HARTH, Dieter, 66869 Kusel (DE)
(74) Vertreter: Patentanwälte Hosenthien-Held und Dr. Held
(86) Internationale Anmeldenummer: PCT/EP2006/006422
(87) Internationale Veröffentlichungsnummer: WO 2007/006440

(56) Entgegenhaltungen:
- WO-A-03/026919
- DE-A1- 3 828 659
- US-A1- 3 202 453
- US-A1- 2002 067 056
- US-B1- 6 196 613

## Beschreibung

Die Erfindung betrifft einen Fahrzeugsitz, insbesondere einen Kraftfahrzeugsitz, mit den Merkmalen des Oberbegriffs des Anspruches 1.

Bei einem aus der DE 38 28 659 A1 bekannten Fahrzeugsitz ist die Lehnenstruktur wahlweise durch Entriegeln ihrer Verriegelungsvorrichtung nach vorne in eine Tischstellung oder durch Entriegeln des Beschlags samt Lehnenträger nach hinten in eine Liegestellung schwenkbar. Zum Beladen des Kraftfahrzeuges wäre in etlichen Fällen eine tiefere Nichtgebrauchsstellung wünschenswert.

In der US 6,196,613 B1 wird ein Fahrzeugsitz vorgeschlagen, bei dem die Lehnenstruktur mittels der angelenkten Lehnenträger an einer Basis angelenkt und an ihrem unteren Ende mit der Basis lösbar verriegelt ist. Eine Neigungseinstellung mit mehreren Gebrauchsstellungen ist nicht vorgesehen. Eine Sitzkissenstruktur ist mittels angelenkter Schwingen ebenfalls an der Basis angelenkt und an ihrem hinteren Ende mit der Basis lösbar verriegelt. Beim Übergang von der Gebrauchsstellung in die Nichtgebrauchsstellung schwenkt die entriegelte Lehnenstruktur nach vorne und der Lehnenträger nach hinten, während unabhängig davon die Sitzkissenstruktur um etwas mehr als 180° nach vorne geschwenkt wird. Zur Führung der Bewegung ist auf jeder Fahrzeugsitzseite eine Schiene vorgesehen, in welcher Rollen laufen, die einerseits am vorderen Ende der Sitzkissenstruktur und andererseits am unteren Ende der Lehnenstruktur vorgesehen sind. In der Nichtgebrauchsstellung schließt die ursprüngliche Unterseite der Sitzkissenstruktur mehr oder weniger bündig und eben an die ursprüngliche Rückseite der dahinter gelegenen Lehnenstruktur an.

Die WO 03/026919 A1 schlägt einen gattungsgemäßen Fahrzeugsitz der eingangs genannten Art vor. Beim Übergang von einer einsitzbaren Gebrauchsstellung in eine flache Nichtgebrauchsstellung wird zunächst die Verriegelungsvorrichtung der Lehnenstruktur gelöst, so dass die Lehnenstruktur relativ zum Lehnenträger nach vorne in die Horizontale bis zu einem Anschlag schwenkt. Dann ist eine Verriegelungsvorrichtung des Lehnenträgers zu lösen, so dass der Benutzer den Lehnenträger nach hinten schwenken kann, bis die Lehnenstruktur am Fahrzeugboden anliegt.

In der US 2002/0067056 A1 wird ein Fahrzeugsitz vorgeschlagen, bei welchem die Lehnenstruktur mittels motorisch antreibbarer Beschläge am Lehnenträger angebracht ist. Der Lehnenträger ist seinerseits mittels motorisch antreibbarer Beschläge an der Sitzkissenstruktur angebracht. Beim Übergang von einer einsitzbaren Gebrauchsstellung in eine flache Nichtgebrauchsstellung schwenkt die Lehnenstruktur nach vorne und der Lehnenträger nach hinten.

Die US 3 202 453 A offenbart einen Fahrzeugsitz, dessen Übergang von einer einsitzbaren Gebrauchsstellung in eine flache Nichtgebrauchsstellung mittels einer Kulissenführung für die Sitzkissenstruktur und den daran fest angebrachten Lehnenträger erfolgt, wobei die Lehnenstruktur relativ zum Lehnenträger nach vorne schwenkt. Dabei entfaltet die Lehnenstruktur einen an ihrem oberen Ende angelegten Ladeboden.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Indem beim Übergang von der Gebrauchsstellung in die Nichtgebrauchsstellung die entriegelte Lehnenstruktur nach vorne und der durch die Lehnenstruktur zwangsgesteuert entriegelte Lehnenträger nach hinten schwenkt, kann eine gegenüber einer Tischstellung tiefere Nichtgebrauchsstellung (Bodenstellung) erreicht werden, welche im Gegensatz zu einer Liegestellung zum Beladen geeignet ist. Verbesserungen können durch bestimmte Endpositionen des Gelenks und/oder eine Mulde in der Fahrzeugstruktur erreicht werden.

Die zwei Verriegelungen, d.h. der Beschlag und die Verriegelungsvorrichtung, erlauben eine einfachere Gestaltung des Lehnenträgers (beispielsweise als einfache Schwinge) und umfangreichere Bewegungsbereiche desselben, während beispielsweise ein Viergelenk als Lehnenträger zwar nur eine Verriegelung, aber dafür mehr gelenkige Teile braucht und eine eingeschränktere Beweglichkeit hat. Aufgrund der seriellen Verriegelung der Lehnenstruktur mit dem Lehnenträger und des Lehnenträgers mit der Sitzteilstruktur bildet die dadurch definierte Lehne eine kinematische Einheit. Diese kinematische Einheit ist in bevorzugter Ausführung mittels des Beschlags als Ganzes in ihrer Neigung einstellbar. Für eine Erhöhung des Sitzkomforts für den Insassen reicht es aus, wenn nur die Lehnenstruktur neigungseinstellbar ist.

Das zwangsgesteuerte Entriegeln des Beschlags vereinfacht die vom Benutzer vorzunehmende Betätigung, indem dieser beispielsweise nur die Verriegelungsvorrichtung der Lehnenstruktur entriegeln muss, während die Lehnenstruktur das Entriegeln des Lehnenträgers vornimmt, also auf den Beschlag einwirkt.

Vorzugsweise entriegelt die Lehnenstruktur den Beschlag mittels einer Koppel, die vorzugsweise starr ausgebildet ist. Für einen speziellen zeitlichen Bewegungsablauf kann die Koppel einen Leerweg vorsehen, beispielsweise eine Schlitz-Zapfen-Führung, mittels welcher das zwangsgesteuerte Entriegeln verzögert und auf einen bestimmten Schwenkwinkelbereich der Lehnenstruktur eingestellt werden kann.

Durch das Entriegeln von Lehnenstruktur und Lehnenträger, d.h. zweier Verriegelungen, werden zwei Freiheitsgrade freigegeben. Um eine eindeutige Gesamtbewegung zu erhalten, sind die Bewegungen der entriegelten Lehnenstruktur und des entriegelten Lehnenträgers vorzugsweise weitgehend aufeinander abgestimmt bzw. gekoppelt, beispielsweise durch ein System zusammenwirkender Federn oder eine Getriebeverbindung. Eine Lehnenkompensationsfeder kann auf die Bewegung des Lehnenträgers relativ zur Sitzteilstruktur einwirken, während eine weitere Federeinheit auf die Bewegung der Lehnenstruktur relativ zum Lehnenträger oder relativ zur Sitzteilstruktur einwirkt. Das Federende, welches dem zu bewegenden Bauteil zugeordnet ist, greift exzentrisch bezüglich dessen Schwenkachse an, beispielsweise an einem Arm, der an dem besagten Bauteil befestigt oder drehfest mit diesem verbunden ist.

Vorzugsweise ist auf jeder Fahrzeugsitzseite genau ein Lehnenträger vorgesehen, beispielsweise in Form einer Schwinge, wobei die beiden Lehnenträger durch Querverbindungen gekoppelt sein können. Dies stabilisiert die Lehne für den Normalgebrauch und für den Crashfall. Die für den Übergang zwischen Gebrauchsstellung und Nichtgebrauchsstellung vorgesehenen Federn oder Getriebeverbindungen brauchen nur auf einer Fahrzeugsitzseite vorhanden sein, vorzugsweise auf verschiedenen Fahrzeugsitzseiten. So kann eine Federeinheit, die zur Einwirkung auf die Bewegung der Lehnenstruktur vorgesehen ist, bei einer Neigungseinstellung zur Kompensation des Lehnengewichts beitragen.

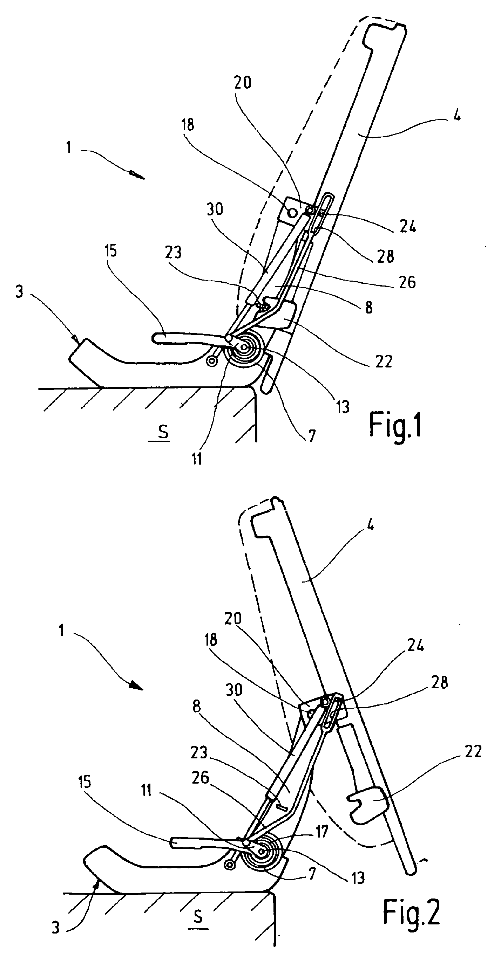

Im folgenden ist die Erfindung anhand zweier in der Zeichnung dargestellter Ausführungsbeispiele näher erläutert. Es zeigen
- Fig. 1: eine Seitenansicht des ersten Ausführungsbeispiels mit angedeuteter Polsterung in der Gebrauchsstellung,
- Fig. 2: eine Fig. 1 entsprechende Seitenansicht in einer Zwischenstellung,

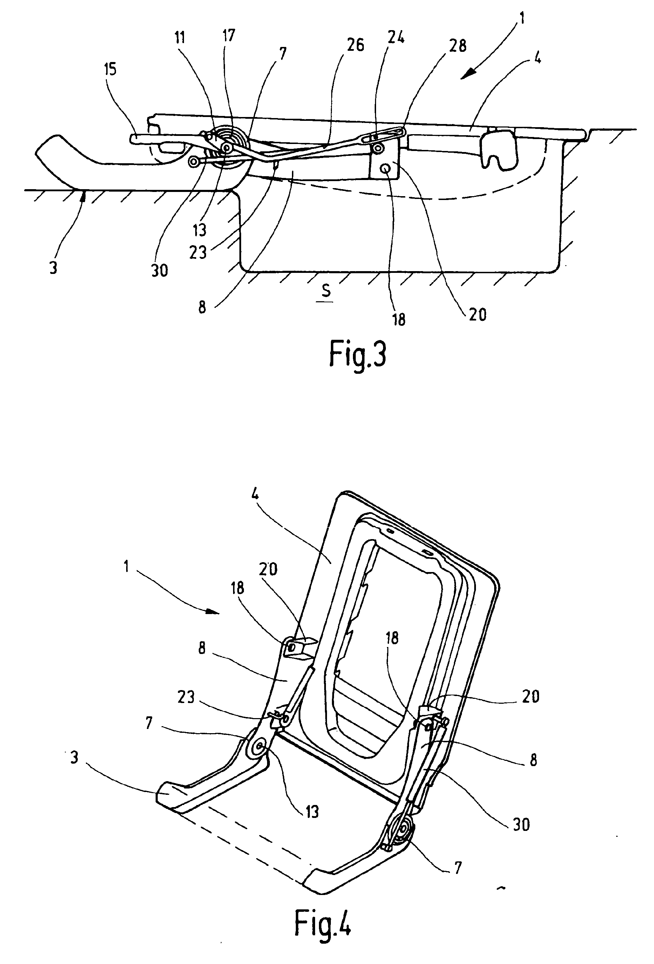

- Fig. 3: eine Fig. 1 entsprechende Seitenansicht in der Nichtgebrauchsstellung,
- Fig. 4: eine perspektivische Teilansicht des ersten Ausführungsbeispiels,

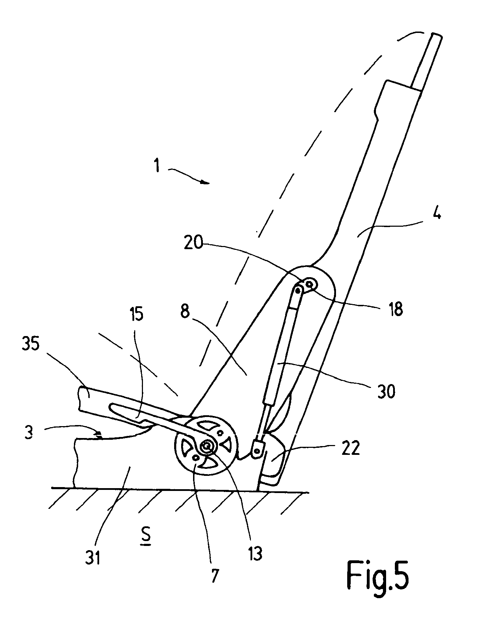

- Fig. 5: eine nur teilweise dargestellte Ansicht der Außenseite des zweiten Ausführungsbeispiels,

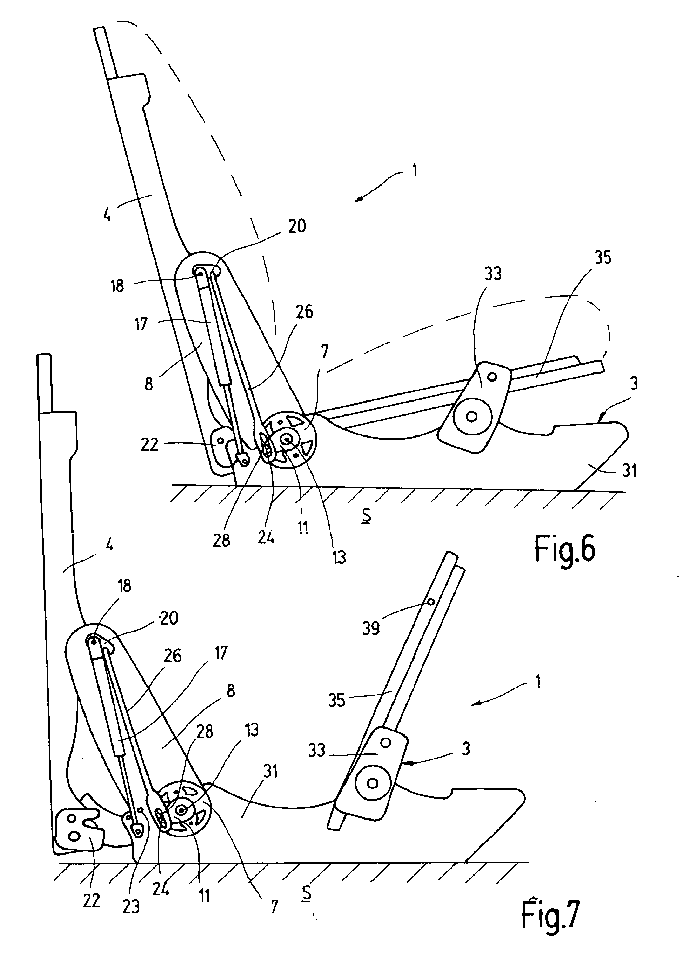

- Fig. 6: eine Ansicht der Innenseite des zweiten Ausführungsbeispiels mit angedeuteter Polsterung in der Gebrauchsstellung,
- Fig. 7: eine Fig. 6 entsprechende Seitenansicht in einer Zwischenstellung,

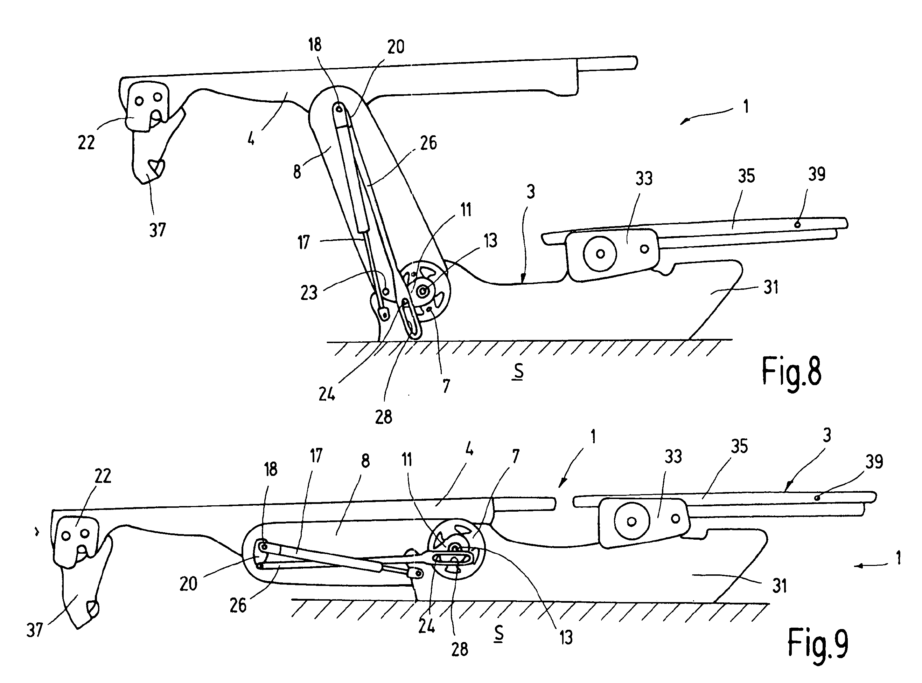

- Fig. 8: eine Fig. 6 entsprechende Seitenansicht in einer weiteren Zwischenstellung, und
- Fig. 9: eine Fig. 6 entsprechende Seitenansicht in der Nichtgebrauchsstellung.

Im ersten Ausführungsbeispiel ist ein Fahrzeugsitz 1 für eine hintere, insbesondere dritte, Sitzreihe eines Kraftfahrzeuges vorgesehen, wobei die Anordnung des Fahrzeugsitzes 1 innerhalb des Kraftfahrzeuges und dessen gewöhnliche Fahrtrichtung die nachfolgend verwendeten Richtungsangaben definieren. Als Teile seiner tragenden Struktur weist der Fahrzeugsitz 1 eine Sitzteilstruktur 3 und eine Lehnenstruktur 4 auf, welche in an sich bekannter Weise gepolstert sind. Dabei kann - für ein Absenken oder Vorklappen des Sitzkissens des Fahrzeugsitzes 1 - die Sitzteilstruktur 3 in sich gelenkig ausgebildet sein. Die Sitzteilstruktur 3 ist vorliegend fest mit der Fahrzeugstruktur S des Kraftfahrzeuges verbunden, könnte aber auch mittels Sitzschienen relativ zur Fahrzeugstruktur S längseinstellbar sein. Auf beiden Fahrzeugsitzseiten ist an der Sitzteilstruktur 3 je ein Beschlag 7 vorgesehen, mittels dessen je ein als Schwinge ausgebildeter Lehnenträger 8 relativ zur Sitzteilstruktur 3 schwenkbar und verriegelbar angebracht ist. Die beiden Lehnenträger 8 definieren zusammen mit der gepolsteren Lehnenstruktur 4 die Lehne des Fahrzeugsitzes 1. Es ist zunächst eine einsitzbare Gebrauchsstellung des Fahrzeugsitzes 1 beschrieben.

Der Beschlag 7 ist vorliegend als Rastbeschlag ausgebildet, wie er beispielsweise bezüglich der inneren Ausgestaltung in der WO 00/44582 A1 und bezüglich seiner äußeren Ausgestaltung in der DE 101 05 282 A1 beschrieben ist, deren Offenbarungsgehalt ausdrücklich einbezogen wird. Dabei ist eines der beiden Beschlagteile fest mit der Sitzteilstruktur 3 an deren hinterem Ende und das andere Beschlagteil fest mit dem Lehnenträger 8 an dessen unterem Ende verbunden. Es ist aber auch möglich, als Beschlag 7 einen Getriebebeschlag mit Freischwenkfunktion zu verwenden, wie er beispielsweise in der DE 100 48 127 A1 beschrieben ist, deren Offenbarungsgehalt ebenfalls ausdrücklich einbezogen wird.

Der normalerweise verriegelte Beschlag 7 ist mittels eines ersten Betätigungselementes 11 entriegelbar, indem das als Winkelhebel ausgebildete erste Betätigungselement 11 eine Welle 13 dreht. Es kann für jeden Beschlag 7 je eine Welle 13 oder für beide Beschläge 7 eine gemeinsame Welle 13 vorgesehen sein, welche die beiden Beschläge 7 koppelt und eine synchrone Entriegelung mittels eines einzigen ersten Betätigungselemente 11 erlaubt. Die Welle 13 fluchtet mit der Drehachse der Beschläge 7, also der Schwenkachse der Lehnenträger 8, relativ zur Sitzteilstruktur 3. Für eine Neigungseinstellung der Lehne ist der Beschlag 7 (in der Ausbildung als Rastbeschlag) mittels eines zweiten Betätigungselementes 15, welches vorliegend als Hebelgriff ausgebildet ist, entriegelbar. Das zweite Betätigungselement 15 ist drehfest mit dem ersten Betätigungselement 11 verbunden oder wirkt direkt auf die Welle 13 ein, wobei eine Mitnahme oder eine Entkopplung vorgesehen sein kann. Eine Lehnenkompensationsfeder 17, welche vorliegend als Spiralfeder ausgebildet ist, wirkt zwischen der Sitzteilstruktur 3 und dem Lehnenträger 8 bzw. den daran angebrachten Beschlagteilen. Bei entriegelten Beschlägen 7 kompensiert die Lehnenkompensationsfeder 17 wenigstens einen Teil des Gewichtes der gesamten Lehne.

Die Lehnenstruktur 4 ist auf beiden Fahrzeugsitzseiten mittels eines als Drehlager ausgebildeten Gelenks 18 am Lehnenträger 8 angelenkt. Das Gelenk 18 zwischen dem oberen Ende des Lehnenträgers 8 und einem nach vorne abstehenden Arm 20 der Lehnenstruktur 4 in deren unterer Hälfte vorgesehen ist. Die durch die Gelenke 18 definierten Drehachsen fluchten miteinander und definieren die Schwenkachse der Lehnenstruktur 4 relativ zu den Lehnenträgern 8. Die Rückseite der Lehnenstruktur 4 weist in der Gebrauchsstellung im wesentlichen nach hinten, leicht schräg zur Horizontalen.

Im Bereich des unteren Endes der Lehnenstruktur 4 ist auf wenigstens einer Fahrzeugsitzseite, vorliegend auf beiden, eine Verriegelungsvorrichtung 22 vorgesehen. Die Verriegelungsvorrichtung 22 ist vorliegend als Schloss ausgebildet, wie beispielsweise in der DE 203 02 007 U1 beschrieben, deren Offenbarungsgehalt ausdrücklich einbezogen wird. Mittels dieser Verriegelungsvorrichtung 22 an der Lehnenstruktur 4 ist die Lehnenstruktur 4 lösbar mit dem zugeordneten Lehnenträger 8 verriegelt, genauer gesagt mit einem Gegenelement 23 am zugeordneten Lehnenträger 8, vorliegend einem Schließbügel des Lehnenträgers 8. Verriegelungsvorrichtung 22 und Gegenelement 23 können in ihren Positionen vertauscht sein. Die durch die Lehnenstruktur 4 und die Lehnenträger 8 definierte Lehne bildet dadurch in der Gebrauchsstellung eine kinematische Einheit. Mittels der Beschläge 7 sind mehrere Gebrauchsstellungen dieser Einheit einstellbar, d.h. die Lehne, also insbesondere die Lehnenstruktur 4, ist neigungseinstellbar. Statt der Kombination aus Gelenk 18 und Verriegelungsvorrichtung 22 kann auch ein Beschlag in der Art des Beschlags 7 vorgesehen sein.

Auf wenigstens einer Fahrzeugsitzseite steht ein lehnenstrukturfester Steuerzapfen 24 seitlich vom Arm 20 ab oder ist anderweitig an der Lehnenstruktur 4 angebracht. Eine Koppel 26 ist an einem Ende am ersten Betätigungselement 11 angelenkt und am anderen Ende am Steuerzapfen 24 drehbar und begrenzt verschieblich angekoppelt, indem sie ihn mit einem Schlitz 28 umschließt. Eine Federeinheit 30, vorliegend eine als Zugfeder eingesetzte Gasfeder, ist einerseits an der Sitzteilstruktur 3 und andererseits am Arm 20 angebracht. Die letztgenannten Bauteile können auf einer Fahrzeugsitzseite oder auf beiden Fahrzeugsitzseiten vorgesehen sein.

Der Fahrzeugsitz 1 kann von der Gebrauchsstellung in eine flache Boden- oder Nichtgebrauchsstellung überführt werden. Hierzu wird - gegebenenfalls nach dem Absenken oder Umklappen des Sitzkissens - die Verriegelungsvorrichtung 22 entriegelt und die Lehnenstruktur 4 relativ zum Lehnenträger 8 um das Gelenk 18 nach vorne geschwenkt. Die Federeinheit 30 wirkt anfangs dieser Bewegung entgegen. Der Steuerzapfen 24 bewegt sich im Schlitz 28 nach oben, durchfährt also einen Leerweg. In einer besonderen Zwischenstellung, d.h. bei einem bestimmten Schwenkwinkel oder wenigstens in einem bestimmten Schwenkwinkelbereich der Lehnenstruktur 4, beispielsweise wenn die Federeinheit 30 eine Totpunktlage überschreitet, gelangt der Steuerzapfen 24 an das Ende des Schlitzes 28 und nimmt die Koppel 26 mit, welche mittels des ersten Betätigungselementes 11 den Beschlag 7 zwangsgesteuert entriegelt.

Wenn beide Beschläge 7 entriegelt sind, können die Lehnenträger 8 nach hinten in die Horizontale geschwenkt werden. Zugleich setzt die Lehnenstruktur 4 ihre Schwenkbewegung fort in Richtung zur Horizontalen. Dabei wandert der Steuerzapfen 24 im Schlitz 28 zurück. Das von der Lehnenkompensationsfeder 17 aufgebaute Drehmoment nach vorne bzw. oben kann bei einer geeigneten Abstimmung wenigstens näherungsweise durch das von der Federeinheit 30 aufgebaute Drehmoment nach unten ausgeglichen werden. Zugleich definiert das Zusammenspiel der Lehnenkompensationsfeder 17 und der Federeinheit 30 eine weitgehende Bewegungsabstimmung oder Zwangsführung von Lehnenstruktur 4 und Lehnenträger 8. Die Bewegungsabstimmung kann auch durch eine Getriebeverbindung des Beschlags 7 und des Gelenks 18, beispielsweise mittels Zahnrädern und Zahnriemen, erreicht werden.

Die Nichtgebrauchsstellung ist erreicht, wenn sowohl die Lehnenträger 8 als auch die Lehnenstruktur 4 wenigstens näherungsweise in die Horizontale gelangt sind. Die letztgenannten Bauteile der Lehne samt Polster können teilweise von einer Mulde der Fahrzeugstruktur S aufgenommen werden. In der Regel ist der vormals obere Teil der Lehne oberhalb der Sitzteilstruktur 3 angeordnet, während der vormals untere Teil in die Mulde ragt. Vorliegend ergibt sich aus dem Zusammenspiel der Bewegungen die Besonderheit, dass die Lehnenstruktur 4 mit ihrem vormals unteren und nunmehr hinteren Ende auf der Fahrzeugstruktur S aufliegt, genauer gesagt sich beim Erreichen der Nichtgebrauchsstellung in eine passende Aufnahme der Fahrzeugstruktur S legt. Die nunmehr nach oben weisende, ursprüngliche Rückseite der Lehnenstruktur 4 schließt dann bündig und eben mit dem dahinter gelegenen, feststehenden Teil des Ladeflächenbodens ab und bildet selber einen Teil des nunmehr durchgehenden Ladeflächenbodens. Eine Sicherung der Nichtgebrauchsstellung ist durch ein erneutes Verriegeln der Beschläge 7 und/oder der Verriegelungsvorrichtungen 22 an entsprechend positionierten Gegenelementen möglich.

Das zweite Ausführugsbeispiel gleicht dem ersten Ausführungsbeispiels, soweit nachfolgend nicht abweichend beschrieben, weshalb gleiche und gleichwirkende Bauteile gleiche Bezugszeichen tragen. Beim Fahrzeugsitz 1 sind die Sitzteilstruktur 3, die Lehnenstruktur 4, die Beschläge 7 und die Lehnenträger 8 gleich ausgebildet. Die Lehnenstruktur 4 ist auf beiden Fahrzeugsitzseiten mittels der Gelenke 18 an den Lehnenträgern 8 angelenkt und - durch Zusammenwirken ihrer jeweiligen Verriegelungsvorrichtung 22 mit dem zugehörigen Gegenelement 23 des zugeordneten Lehnenträgers 8 - mit besagtem Lehnenträger 8 verriegelt. Die beiden Betätigungselemente 11 und 15 können jeweils die Welle 13 drehen, welche die Beschläge 7 entriegelt.

Das erste Betätigungselement 11 ist an demjenigen Ende der Welle 13 angeordnet, welches auf derjenigen Fahrzeugsitzseite näher zur Fahrzeugmitte angeordnet ist, kurz als Innenseite des Fahrzeugsitzes 1 bezeichnet. Das zweite Betätigungselement 15 ist an demjenigen Ende der Welle 13 angeordnet, welches auf derjenigen Fahrzeugsitzseite näher zum Fahrzeugäußeren angeordnet ist, kurz als Außenseite des Fahrzeugsitzes 1 bezeichnet.

Auf der Innenseite des Fahrzeugsitzes 1 ist im Bereich des zugeordneten Gelenks 18 der Arm 20 angeordnet, welcher drehfest mit der Lehnenstruktur 4 verbunden ist. Mit der durch die Gelenke 18 definierten Schwenkachse der Lehnenstruktur 4 fluchtend, beispielsweise an einem Lagerbolzen des Gelenks 18, ist das obere Ende der Lehnenkompensationsfeder 17 angelenkt. Die Lehnenkompensationsfeder 17 ist vorliegend als Gasfeder ausgebildet. Das untere Ende der Lehnenkompensationsfeder 17 ist an der Sitzteilstruktur angelenkt. Am Arm 20, also exzentrisch zum Gelenk 18, ist das obere Ende der Koppel 26 angelenkt. Die Koppel 26 ist so angeordnet, dass sich der Schlitz 28 am unteren Ende befindet. Mittels des Schlitzes 28 umschließt die Koppel 26 den Steuerzapfen 24. Der Steuerzapfen 24 ist am ersten Betätigungselement 11 angeordnet, und zwar exzentrisch zur Schwenkachse der Beschläge 7, mit welcher die Welle 13 fluchtet.

Auf der Außenseite des Fahrzeugsitzes 1 ist im Bereich des zugeordneten Gelenks 18 ein weiterer Arm 20 angeordnet, welcher ebenfalls drehfest mit der Lehnenstruktur 4 verbunden ist. An diesem Arm 20, also exzentrisch zum Gelenk 18, ist das obere Ende der Federeinheit 30 angelenkt. Die Federeinheit 30 ist vorliegend als Gasfeder ausgebildet. Das untere Ende der Federeinheit 30 ist an der Sitzteilstruktur 3 angelenkt.

Die Funktionsweise des zweiten Ausführungsbeispiels mit den vorstehend beschriebenen Bauteilen stimmt mit derjenigen des ersten Ausführungsbeispiels überein.

Die bislang in beiden Ausführungsbeispielen nur pauschal als Baugruppe eingeführte Sitzteilstruktur 3 umfasst eine Basis 31, zwei Schwingen 33 und eine Sitzkissenstruktur 35. Die Basis 31 ist der bislang beschriebene Teil der Sitzteilstruktur 3, welcher direkt oder indirekt mit der Fahrzeugstruktur S verbunden ist, und an welchem die Beschläge 7 sowie die beiden Federn 17 und 30 mit einem Ende direkt oder indirekt befestigt sind. Auf jeder Fahrzeugsitzseite ist eine der beiden Schwingen 33 mit einem Ende angelenkt. Das andere Ende jeder Schwinge 33 ist an der Sitzkissenstruktur 35 angelenkt. Die einander entsprechenden Gelenke auf den beiden Fahrzeugsitzseiten fluchten untereinander. Statt mittels der Schwingen 33 und ihren jeweils zwei Schwenkachsen kann die Sitzkissenstruktur 35 in abgewandelter Ausführung direkt an der Basis 31 angelenkt sein, also mittels einer einzigen Schwenkachse, die durch zwei miteinander fluchtende Gelenke definiert wird.

Die Sitzkissenstruktur 35 definiert zusammen mit ihrer Polsterung das Sitzkissen des Fahrzeugsitzes 1. Zwischen Basis 31 und Schwingen 33 und/oder zwischen Schwingen 33 und Sitzkissenstruktur 35 können Federn wirksam sein und eine Vorspannung aufbauen. Die Unterseite der Sitzkissenstruktur 35 weist in der Gebrauchsstellung im wesentlichen nach unten, leicht schräg zur Vertikalen.

In der Gebrauchsstellung des Fahrzeugsitzes 1 ist die Sitzkissenstruktur 35 mittels wenigstens einer zweiten Verriegelungsvorrichtung 37, beispielsweise beidseitig einem Schloss an der an der Lehnenstruktur 4 (oder am Lehnenträger 8 oder an der Basis 31), und einem damit zusammenwirkenden zweiten Gegenelement 39, beispielsweise beidseitig einem Bolzen an der Sitzkissenstruktur 35, verriegelt. Zweite Verriegelungsvorrichtung 37 und zweites Gegenelement 39 können in ihren Positionen vertauscht sein. Statt einer Verriegelung kann in abgewandelter Ausführung die Lehnenstruktur 4, beispielsweise formschlüssig mittels eines Anschlags oder einer Aufnahme, die Sitzkissenstruktur 35 in der Gebrauchsstellung festhalten.

Beim Übergang von der Gebrauchsstellung in die Nichtgebrauchsstellung erfolgt nicht nur die oben beschriebene Relativbewegung von Lehnenstruktur 4, Lehnenträger 8 und Sitzteilstruktur 3 (genauer gesagt deren Basis 31), sondern es wird auch die zweite Verriegelungsvorrichtung 37 entriegelt. Wenn die Lehnenstruktur 4 ungefähr eine vertikale Zwischenstellung erreicht hat, gibt sie den Schwenkbereich der Sitzkissenstruktur 35 frei. Daraufhin wird die Sitzkissenstruktur 35 vorgeschwenkt, vorliegend um etwas mehr als 180°, so dass die ursprüngliche Unterseite der Sitzkissenstruktur 35 horizontal ausgerichtet ist und nach oben weist. Diese Bewegung wird vorliegend durch die besagte, durch die Federn an den Schwingen 33 aufgebaute Vorspannung unterstützt, erfolgt also automatisch.

In der Nichtgebrauchsstellung schließt die ursprüngliche Unterseite der Sitzkissenstruktur 35 mehr oder weniger bündig und eben an die ursprüngliche Rückseite der dahinter gelegene Lehnenstruktur 4 an und bildet so einen weiteren Teil des nunmehr durchgehenden Ladeflächenbodens. Im bevorzugten Fall, dass der Fahrzeugsitz 1 in der dritten Sitzreihe verwendet wird, ist vorzugsweise eine Nichtgebrauchsstellung der Fahrzeugsitze der zweiten Sitzreihe vorgesehen, gemäß der die ursprüngliche Rückseite der zugehörigen Lehne der zweiten Sitzreihe sich mehr oder weniger bündig und eben an die ursprüngliche Unterseite der Sitzkissenstruktur 35 der dritten Sitzreihe anschließt. Der Ladeflächenboden wird dadurch noch mehr vergrößert.

### Bezugszeichenliste

- 1: Fahrzeugsitz
- 3: Sitzteilstruktur
- 4: Lehnenstruktur
- 7: Beschlag
- 8: Lehnenträger
- 11: erstes Betätigungselement
- 13: Welle
- 15: zweites Betätigungselement
- 17: Lehnenkompensationsfeder
- 18: Gelenk
- 20: Arm
- 22: Verriegelungsvorrichtung
- 23: Gegenelement
- 24: Steuerzapfen
- 26: Koppel
- 28: Schlitz
- 30: Federeinheit
- 31: Basis
- 33: Schwinge
- 35: Sitzkissenstruktur
- 37: zweite Verriegelungsvorrichtung
- 39: zweites Gegenelement.
- S: Fahrzeugstruktur

## Patentansprüche

1. Fahrzeugsitz, insbesondere Kraftfahrzeugsitz, mit einer Sitzteilstruktur (3), wenigstens einem Lehnenträger (8), der an der Sitzteilstruktur (3) verriegelbar angelenkt ist, und einer Lehnenstruktur (4), die mittels eines Gelenks (18) am Lehnenträger (8) angelenkt und mittels einer Verriegelungsvorrichtung (22) mit dem Lehnenträger (8) verriegelbar ist, wobei der Fahrzeugsitz (1) durch Entriegeln und Schwenken des Lehnenträgers (8) und/oder der Lehnenstruktur (4) von einer einsitzbaren Gebrauchsstellung in eine flache Nichtgebrauchsstellung überführbar ist, wobei beim Übergang von der Gebrauchsstellung in die Nichtgebrauchsstellung zunächst nur die Verriegelungsvorrichtung (22) entriegelt und die entriegelte Lehnenstruktur (4) nach vorne schwenkt und dann der entriegelte Lehnenträger (8) nach hinten schwenkt, **dadurch gekennzeichnet, dass** beim Übergang von der Gebrauchsstellung in die Nichtgebrauchsstellung die Lehnenstruktur (4) in einer Zwischenstellung in einem bestimmten Schwenkwinkelbereich durch ihr Schwenken wenigstens einen Beschlag (7) zwangsgesteuert entriegelt, mittels dessen der Lehnenträger (8) an der Sitzteilstruktur (3) verriegelbar angelenkt ist.

2. Fahrzeugsitz nach Anspruch 1, **dadurch gekennzeichnet, dass** zwischen der Lehnenstruktur (4) und einem ersten Betätigungselement (11) des Beschlags (7) eine Koppel (26) zum zwangsgesteuerten Entriegeln vorgesehen ist.

3. Fahrzeugsitz nach Anspruch 2, **dadurch gekennzeichnet, dass** die Koppel (26) einen Leerweg vorsieht, wobei in einem bestimmten Schwenkwinkelbereich der Lehnenstruktur (4) der Leerweg durchfahren ist und die Koppel (26) zum Einsatz kommt.

4. Fahrzeugsitz nach Anspruch 3, **dadurch gekennzeichnet, dass** zur Realisierung des Leerweges die Lehnenstruktur (4) oder das erste Betätigungselement (11) einen Zapfen (24) und die Koppel (26) an dem zugeordneten Ende einen damit zusammenwirkenden Schlitz (28) aufweist.

5. Fahrzeugsitz nach einem der vorhergehenden Ansprüche, **dadurch gekennzeichnet, dass** Federn (17, 30) und/oder eine Getriebeverbindung die Bewegungen der entriegelten Lehnenstruktur (4) und des entriegelten Lehnenträgers (8) aufeinander abstimmen.

6. Fahrzeugsitz nach Anspruch 5, **dadurch gekennzeichnet, dass** eine der Federn (17, 30) in dem bestimmten Schwenkwinkelbereich der Lehnenstruktur (4) eine Totpunktlage überschreitet.

7. Fahrzeugsitz nach einem der vorhergehenden Ansprüche, **dadurch gekennzeichnet, dass** in der Nichtgebrauchsstellung das Gelenk (18) tiefer als der Beschlag (7) angeordnet ist.

8. Fahrzeugsitz nach einem der vorhergehenden Ansprüche, **dadurch gekennzeichnet, dass** eine Mulde der Fahrzeugstruktur (S) in der Nichtgebrauchsstellung die durch den Lehnenträger (8), die Lehnenstruktur (4) und deren Polsterung definierte Lehne wenigstens teilweise aufnimmt.

9. Fahrzeugsitz nach einem der vorhergehenden Ansprüche, **dadurch gekennzeichnet, dass** in der Gebrauchsstellung die Lehnenstruktur (4) mittels des Beschlags (7) neigungseinstellbar ist.

10. Fahrzeugsitz nach einem der vorhergehenden Ansprüche, **dadurch gekennzeichnet, dass** die Sitzteilstruktur (3) eine Sitzkissenstruktur (35) umfasst, die relativ zu einer Basis (31) mittels wenigstens einer Schwinge (33) oder direkt um einer Schwenkachse, insbesondere automatisch, von der Gebrauchsstellung in die Nichtgebrauchsstellung schwenkbar ist, vorzugsweise um etwas mehr als 180°.

11. Fahrzeugsitz nach Anspruch 10, **dadurch gekennzeichnet, dass** das Schwenken von der Gebrauchsstellung in die Nichtgebrauchsstellung aufgrund einer Vorspannung, die insbesondere durch Federn zwischen der Basis (31), gegebenenfalls den Schwingen (33), und der Sitzkissenstruktur (35) aufgebaut wird, erfolgt, sobald die Lehnenstruktur (4) eine bestimmte Zwischenstellung erreicht hat.

## Claims

1. A vehicle seat, in particular a motor vehicle seat, having a seat part structure (3), at least one backrest support (8) which is hinged to the seat part structure (3) in a lockable manner, and having a backrest structure (4) which is hinged to the backrest support (8) by means of a hinge and can be locked to the backrest support (8) by means of a locking device (22), wherein the vehicle seat (1) can be transferred from a seated use position to a flat non-use position by unlocking and pivoting the backrest support (8) and/or the backrest structure (4), wherein, when the transition is made from the use position to the non-use position, first only the locking device (22) is unlocked, and the unlocked backrest structure (4) pivots forwards, and then the unlocked backrest support (8) pivots backwards, **characterized in that**, when the transition is made from the use position to the non-use position, the backrest structure (4) unlocks by its pivoting, in an intermediate position in a certain pivot angle range, at least one fitting (7) in a force-controlled manner, by means of said fitting the backrest support (8) is lockably hinged to the seat-part structure (3).

2. A vehicle seat according to Claim 1, **characterized in that** a coupling element (26) for force-controlled unlocking is provided between the backrest structure (4) and a first actuating element (11) of the fitting (7).

3. A vehicle seat according to Claim 2, **characterized in that** a coupling element (26) provides a free travel path that is traversed in a certain pivot angle range of the backrest structure (4) causing the coupling element (26) to come into play.

4. A vehicle seat according to Claim 3, **characterized in that**, in order to achieve the free travel path, the backrest structure (4) or the first actuating element (11) has a pin (24), and the coupling element (26) has a slot (28) cooperating therewith at the associated end.

5. A vehicle seat according to one of the preceding claims, **characterized in that** springs (17, 30) and/or a geared connection match the movements of the unlocked backrest structure (4) and of the unlocked backrest support (8) to one another.

6. A vehicle seat according to Claim 5, **characterized in that** in the particular pivot angle range of the backrest structure (4) one of the springs (17, 30) passes through a dead center position.

7. A vehicle seat according to one of the preceding claims, **characterized in that** in the non-use position the hinge (18) is arranged at a lower point than the fitting (7).

8. A vehicle seat according to one of the preceding claims, **characterized in that** in the non-use position a depression in the vehicle structure (S) at least partially accepts the backrest as defined by the backrest support (8), the backrest structure (4) and the upholstery thereof.

9. A vehicle seat according to one of the preceding claims, **characterized in that** in the use position, the inclination of the backrest structure (4) can be adjusted by means of the fitting (7).

10. A vehicle seat according to one of the preceding claims, **characterized in that** the seat part structure (3) comprises a seat cushion structure (35) that is pivotable, preferably by slightly more than 180°, from the use position into the non-use position, relative to a base (31), by means of at least one rocker (33), or directly around a pivot axis, especially automatically.

11. A vehicle seat according to Claim 10, **characterized in that** the pivoting from the use position into the non-use position is accomplished by pretension that is built up in particular by springs between the base (31), possibly the rockers (33), and the seat cushion structure (35), as soon as the backrest structure (4) has reached a certain intermediate position.

## Revendications

1. Siège de véhicule, en particulier siège de véhicule automobile, avec une structure de partie d'assise (3), avec au moins un support de dossier (8) qui est articulé de manière verrouillable sur la structure de partie d'assise (3) et avec une structure de dossier (4) qui est articulée sur le support de dossier (8) à l'aide d'une articulation (18) et qui peut être verrouillée avec le support de dossier (8) à l'aide d'un dispositif de verrouillage (22), le siège de véhicule (1) étant apte à être déplacé entre une position d'usage permettant de s'asseoir et une position de non-usage à plat par un déverrouillage et un pivotement du support de dossier (8) et/ou de la structure de dossier (4), où, dans la transition entre la position d'usage et la position de non-usage, seul le dispositif de verrouillage (22) est d'abord déverrouillé et la structure de dossier (4) déverrouillée est pivotée vers l'avant, après quoi le support de dossier (8) déverrouillé est pivoté vers l'arrière, **caractérisé par le fait que**, dans la transition entre la position d'usage et la position de non-usage, dans une position intermédiaire sur une plage déterminée d'angle de pivotement, la structure de dossier (4) déverrouille par actionnement forcé, du fait de son pivotement, au moins une ferrure (7) grâce à laquelle le support de dossier (8) est articulé de manière verrouillable sur la structure de partie d'assise (3).

2. Siège de véhicule selon la revendication 1, **caractérisé par le fait qu'**il est prévu, entre la structure de dossier (4) et un premier élément d'actionnement (11) de la ferrure (7), une bielle (26) de déverrouillage par actionnement forcé.

3. Siège de véhicule selon la revendication 2, **caractérisé par le fait que** la bielle (26) prévoit une course à vide, la course à vide étant parcourue sur une plage déterminée d'angle de pivotement de la structure de dossier (4), après quoi la bielle (26) entre en action.

4. Siège de véhicule selon la revendication 3, **caractérisé par le fait que**, pour réaliser la course à vide, la structure de dossier (4) ou le premier élément d'actionnement (11) possède un tourillon (24) et la bielle (26) porte à son extrémité correspondante une fente (28) avec laquelle elle coopère.

5. Siège de véhicule selon l'une des revendications précédentes, **caractérisé par le fait que** des ressorts (17, 30) et/ou une liaison par transmission font se correspondre les mouvements de la structure de dossier (4) déverrouillée et du support de dossier (8) déverrouillé.

6. Siège de véhicule selon la revendication 5, **caractérisé par le fait qu'**un des ressorts (17, 30) dépasse une position de point mort sur la plage déterminée d'angle de pivotement de la structure de dossier (4).

7. Siège de véhicule selon l'une des revendications précédentes, **caractérisé par le fait que**, dans la position de non-usage, l'articulation (18) est située plus bas que la ferrure (7).

8. Siège de véhicule selon l'une des revendications précédentes, **caractérisé par le fait qu'**une cuvette de la structure du véhicule (S), dans la position de non-usage, reçoit au moins partiellement le dossier formé par le support de dossier (8), la structure de dossier (4) et leur rembourrage.

9. Siège de véhicule selon l'une des revendications précédentes, **caractérisé par le fait que**, dans la position d'usage, la structure de dossier (4) peut être réglée en inclinaison à l'aide de la ferrure (7).

10. Siège de véhicule selon l'une des revendications précédentes, **caractérisé par le fait que** la structure de partie d'assise (3) comprend une structure de coussin d'assise (35) qui est apte à pivoter, en particulier automatiquement, entre la position d'usage et la position de non-usage, de préférence d'environ plus de 180 ° par rapport à une base (31), à l'aide d'au moins une coulisse (33) ou directement autour d'un axe de pivotement.

11. Siège de véhicule selon la revendication 10, **caractérisé par le fait que** le pivotement entre la position d'usage et la position de non-usage s'effectue à l'aide d'une précontrainte qui est appliquée en particulier par des ressorts entre la base (31), éventuellement les coulisses (33), et la structure de coussin d'assise (35) dès que la structure de dossier (4) a atteint une certaine position intermédiaire.
